(19) **Europäisches Patentamt / European Patent Office / Office européen des brevets**

(11) **EP 1 864 527 B1**

(12) **EUROPEAN PATENT SPECIFICATION**

(45) Date of publication and mention
of the grant of the patent:
**28.08.2013 Bulletin 2013/35**

(51) Int Cl.:
***H04W 16/32*** *(2009.01)*

(21) Application number: **05729044.7**

(22) Date of filing: **31.03.2005**

(86) International application number:
**PCT/EP2005/003400**

(87) International publication number:
**WO 2006/102918 (05.10.2006 Gazette 2006/40)**

(54) **Distributed antenna system**

Verteiltes Antennensystem

Système d'antennes distribuées

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**12.12.2007 Bulletin 2007/50**

(73) Proprietor: **Telecom Italia S.p.A.**
**20123 Milano (IT)**

(72) Inventors:
• **LUDOVICO, Michele**
**I-10148 Torino (IT)**
• **GUERRINI Claudio**
**I-10148 TORINO (IT)**

(74) Representative: **Battipede, Francesco et al**
**Telecom Italia S.p.A.**
**Piazza L. Einaudi, 8**
**20124 MIlano (IT)**

(56) References cited:
**US-A- 5 265 263     US-A- 5 627 879**
**US-B1- 6 308 085**

• **"Universal Mobile Telecommunications System (UMTS); Spreading and modulation (FDD) (3GPP TS 25.213 version 6.1.0 Release 6); ETSI TS 125 213" ETSI STANDARDS, EUROPEAN TELECOMMUNICATIONS STANDARDS INSTITUTE, SOPHIA-ANTIPO, FR, vol. 3-R1, no. V610, December 2004 (2004-12), XP014027619 ISSN: 0000-0001 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

Field of the invention

The present invention relates to techniques for radio access in mobile-radio systems.
The invention has been developed with particular attention paid to its possible use in networks including distributed radio base stations.

Description of the known art

The mobile-radio system must guarantee a service of communication between a fixed network and mobile terminals (user terminals) randomly distributed over a certain service area. The radio coverage is obtained by installing a plurality of radio base stations, each of which has the task of covering a certain portion of the area, referred to as a cell, whence the name of "cellular systems". The generic mobile terminal can communicate with the fixed network through one of the radio base stations of the system, for example the one from which it receives the radio signal with best quality. The procedures through which the terminal, once turned on, chooses the radio base station from which to receive the system information are designated by the term "cell selection".
Some systems (for example, UMTS - Universal Mobile Telecommunications System) envisage the possibility that a user terminal will be served simultaneously by a plurality of radio base stations: this condition is designated by the term "macrodiversity". The characteristics of mobility of the users make it necessary to provide for appropriate handover (or handoff) procedures designed to guarantee the continuity of the communication in the passage between one cell and another. Each radio base station transmits on the downlink a plurality of communication channels, corresponding to different signalling or service specific data flows. The,term "pilot channel" or "beacon channel" designates a particular communication channel corresponding to a known sequence of bits (the characteristics of which differ from system to system). The user terminal measures the radio quality of the beacon channels that it manages to receive and, on the basis of these measurements, selects the serving cell in the "cell selection" step or the "handover" step.
The requirements of capacity and coverage in densely urbanized areas lead in many cases to the need for providing cell networks with a high site density. In this context, the use of microcells affords significant advantages in terms of simplicity of acquisition of the sites, of increase in the capacity of the radio interface and of greater efficiency in terms of indoor penetration, as documented in: J. Laiho et al., "Radio Network Planning and Optimisation for UMTS", Wiley, 2001, pages 322-325.
As compared to conventional cells (frequently indicated as macrocells), the microcells have the following distinctive characteristics:

-   limited radius of cell (typically less than 400 - 500 m);
-   positioning of the radiating apparatus at a height lower than the average height of the surrounding buildings; and
-   limited transmitted power (typically less than 5 W) .

A technical problem associated to the widespread use of microcells is linked to the service supplied to high-mobility users. A user who is moving at high speed in a microcell context, in fact, executes a very large number of handover procedures between the cells, which cause a signalling overload both on the uplink and on the downlink. In addition to the signalling overload, it should be recalled that processing delays are inevitably associated to the operations of measurement and to the consequent operations for support of mobility. In the case of small cell dimensions these processing delays can prove critical for execution of handoff procedures, with consequent possible drop of the call.
A possible solution to this problem is the simultaneous use of microcells and macrocells. The macrocells are used for guaranteeing a service to high-mobility users, whereas the microcells are used for offering a service requiring high capacity to low-mobility users (for example, to provide high-bitrate packet services).
Document US 5,265,263 discloses a cellular radio system including a plurality of cells each normally using a respective channel for control purposes, wherein a number of adjacent cells comprise a group of cells and in the event of a call associated with equipment moving in said group of cells the equipment is allocated a common channel for all cells of the group, to facilitate handover between the cells of the group.
In the case of UMTS, with particular reference to the FDD (Frequency-Division Duplex) component, the layer of macrocell coverage and the layer of microcell coverage can use the same W-CDMA (Wideband Code-Division Multiple Access) radio carrier or else distinct carriers.
As highlighted in: T. Ojampera, R. Prasad, "Wideband CDMA for Third Generation Mobile Communications", Artech House, 1998, pages 252-253, the use of a system with macrocells and microcells on the same W-CDMA carrier presents numerous problems of design and operation. One of the most important problems, designated by the term "near-far", is represented by the following condition: a mobile terminal, albeit located in the proximity of a microcell, is served by a macrocell. This condition can be caused, for example, by a delay in the handover procedures, as mentioned above, and brings about an increase in the interference suffered by the microcell and, consequently, a deterioration in the performance for all the users served by the microcell itself.

Typically, then, different W-CDMA carriers are used for the microcell layer and for the macrocell layer. Frequently, however, the UMTS operators have a very limited number of carriers available. The need to use different carriers for the two layers constitutes, then, a major constraint in the setting-up of UMTS networks. In the case where the operator has only two carriers available for example, this constraint results in an obligate choice and prevents alternative solutions such as, in particular, the use of both of the carriers at the microcell layer, which maximizes the overall capacity of the W-CDMA radio access.

Additionally, architectures of a Distributed-Antenna System (DAS) type so far known do not enable implementation of a hierarchical structure. The known solutions of a DAS type are constituted by a central unit connected, typically by means of optical-fibre connections of an analogic or digital type, to a plurality of remote units.

For instance, the solution described in EP-A-0 391 597 envisages the distribution of one and the same signal through a multiplicity of antennas. In this case, a single beacon channel is radiated through a multiplicity of remote units that behave as "signal repeaters", and handover procedures are not necessary between areas of coverage associated to one and the same remote unit. More specifically, EP-A-0 391 597 discloses a microcellular communication system that includes optical-fiber connections between a radio base station and a set of Opto-Radio-Frequency (opto-RF) transducers located in a closely spaced grid. In this context, the radio-based signals are modulated directly onto laser outputs through the optical fibers for both transmission to mobile units or from the mobile units. The opto-RF transducers, housed in canisters, are mounted on telephone or power poles to provide radio link coverage to mobile and portable phones located in a microcell area, e.g., in congested metropolitan area where space for a roof-top base station is very limited and expensive.

In US-5 627 879 a solution of a DAS type is described, in which there is a microcell system wherein a plurality of commonly located microcell base station units communicate with a corresponding plurality of microcell antenna units deployed in respective microcell areas. Each base station unit includes conventional RF base station transmitter and receiver pairs, one for each channel assigned to the microcell. Additional receivers are also provided to receive diversity channels. The RF signal outputs from the transmitters are combined and applied to a broadband analog-to-digital converter. The digitized signal is transmitted over optical fiber to a microcell unit. Each microcell unit receives a digitized RF signal and reconstructs the analog RF signal using a digital-to-analog converter. The reconstructed RF signal is applied to a power amplifier, the output of which is fed to an antenna for broadcast into the microcell area. Each remote unit is thus managed as a true microcell. Associated to each remote unit, then, is a beacon channel. In this case, the passage of a user from one microcell to an adjacent microcell causes execution of a handover procedure.

US-B-6 308 085 describes a DAS solution that envisages procedures for the choice of one or more remote units to use for the transmission (or reception) of signals to (from) a given user. The choice is made on the basis of the conditions of propagation. More specifically, US-B-6 308 085 proposes a distributed antenna system (DAS) comprising a plurality of antennas arranged in a distributed manner such that individual service areas partly overlap one another, and a centralized controller for controlling the plurality of antennas; the centralized controller comprises a selection circuit for selecting at least one of the plurality of antennas and a beam forming circuit for forming at least one beam by setting desired excitation conditions for the at least one of the plurality of antennas selected. The required antenna units are selected taking into account the conditions of propagation and interference present at the moment of the communication. In the control unit, the selection of the antenna unit and of the beam is made independently for transmission and reception.

object and summary of the invention

Applicant has felt the need for improved distributed-antenna systems adapted to operate in a more satisfactory way, for example using hierarchical structures, and that:

- permit an efficient use of the power on the downlink path;
- do not give rise to a high signalling overload, especially in the presence of high-mobility users;
- may exploit the information linked to the mobility of the user, to the load of the cells, to the characteristics of the service requested by the user, this enabling a degree of flexibility typically associated to hierarchical structures.

The object of the present invention is to meet the aforesaid needs.

According to the present invention, that object is achieved by means of a method having the features set forth in the claims that follow. The invention also relates to a corresponding network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

A preferred example thus provides radio access in a mobile-radio network including antenna elements by:

- equipping said antenna elements for communication with at least one first communication channel providing a first layer of individual radio ("microcell") coverage for said antenna elements, and at least one second communication channel, and
- making said at least one second communication channel common to at least one group of said antenna elements to provide a second layer of radio coverage aggregating (as a "virtual macrocell" coverage) the radio coverages of the antenna elements included in said at least one group.

Preferably, said at least one group includes neighbouring antenna elements in said mobile-radio network.

Still preferably, the arrangement includes the steps of:

- providing a plurality of said second communication channels, and
- making each said second communication channel in said plurality common to a respective group of said antenna elements, wherein said second layer of radio coverage is partitioned in virtual cells each said virtual cell aggregating the radio coverages of the antenna elements included in said respective group.

In a particularly preferred example, at least one of said antenna elements is equipped for communication over a plurality of said second communication channels, and said at least one of said antenna elements is adapted to selectively make each said second communication channel in said plurality common to different respective groups of said antenna elements, thus switching from one virtual macrocell to another.

The preferred examples referred to in the foregoing rely upon the use of a DAS (Distributed-Antenna System) based upon a hierarchical structure. Specifically, the system described herein is based upon a set of microcell antenna elements that guarantee coverage for a portion of territory in an urban environment. The set is divided into groups: each group aggregates a variable number of antenna elements. Each element, belonging to a given group, radiates two beacon channels: the first channel is associated uniquely to the antenna element considered, the second channel is common to all the antenna elements belonging to the group.

The radio-access system in this way provides two overlapping layers of coverage: the first layer is made up of true microcells, each of which corresponds to one of the antenna elements; the second layer is made up of "virtual macrocells", each of which corresponds to a distributed antenna and aggregates a group of neighbouring antenna elements. The microcell elements are connected by an optical-fibre network based upon digital or analogic ROF (Radio Over Fibre) technology. In the area of coverage of the distributed-antenna system a mobile terminal can select, on the basis of hierarchical criteria, one of the two layers available. Selection modules can be defined on the basis of the characteristics of the individual user (for example mobility, parameters of quality of the service, etc.).

The user that selects the microcell layer exploits the greater capacity guaranteed by the microcells; this user, however, must execute a handover procedure (with the consequent signalling overload) for each passage from one microcell to another.

The user that selects the layer of virtual macrocells, instead, exploits a smaller capacity but, as long as he remains within the same virtual macrocell, does not need to execute any handover procedure to pass from one area of coverage of a radio base station to another. Therefore, the user asks for a communication to be set up for a given service using the chosen layer. The network-control apparatuses (Radio Network Controller - RNC - in the case of UMTS), at this point, can accept the request of the user or else force the user to choose a given layer, on the basis of the additional information present at the network end (for example regarding the load of the cells), of the characteristics of the service requested by the user, and of the policies of management of the radio resources.

The arrangement described herein guarantees the characteristics of flexibility typically associated to hierarchical structures.

As compared to traditional hierarchical structures, the arrangement described herein affords the following advantages:

- the hierarchical structure is obtained with a single set of elements of a microcell type; the cost of the radiating and transceiver apparatus, then, is comparable with the cost associated to just the microcell layer of a traditional hierarchical system;
- in the case of UMTS, it is possible to use the same W-CDMA carrier for the two hierarchical layers; the system proposed, in fact, is not affected by the near-far problem, as the same radiating points are used for the macrocell layer and for the microcell layer.

As compared to the known DAS solutions, then, the arrangement described herein achieves i.a. the following advantages:

- it enables a layer of true microcells and a layer of virtual macrocells (constituted by aggregating areas of coverage of a plurality of microcells) to be obtained with a single set of remote units; and
- it enables definition of modules that are able to assign to each user the optimal layer, exploiting all the information available both at the user end and at the network end.

Brief description of the drawings

The invention will now be described, by way of non-limiting example, with reference to the figures of the annexed figures of drawing, wherein:

- Figure 1 shows the basic structure of a distributed system as described herein;
- Figure 2 shows in detail an exemplary embodiment of a system of the type shown in Figure 1, based upon an ROF (Radio Over Fibre) solution of an analogic type;
- Figure 3 shows an exemplary structure of radio-frequency combinatorial networks adapted to be used in the arrangement of Figure 2; and
- Figure 4 shows a further exemplary embodiment of the system of Figure 1.

Detailed description of exemplary embodiments of the invention

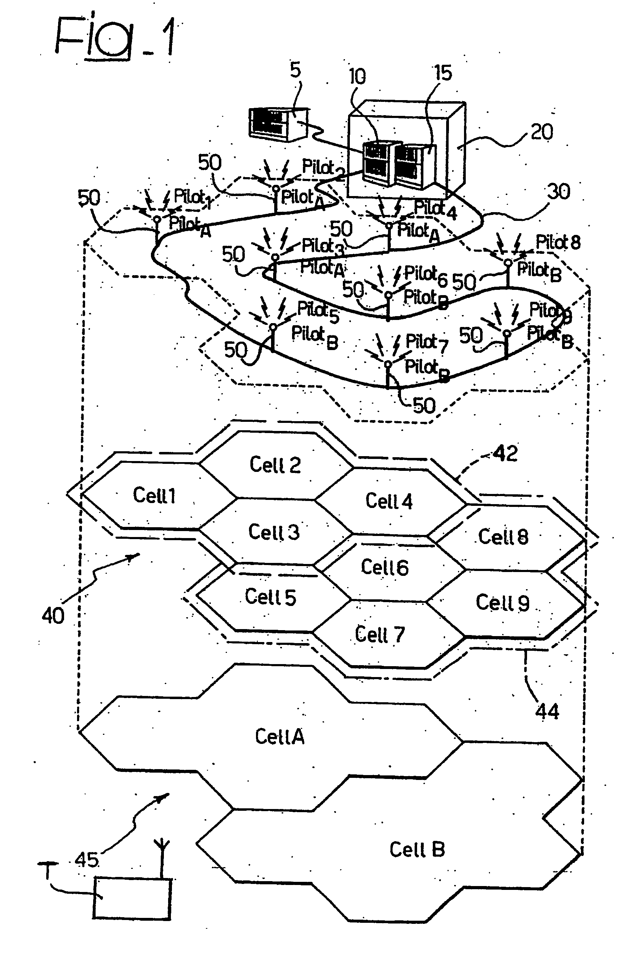

Figure 1 illustrates an example of base structure of a distributed antenna system. Specifically, the arrangement shown in Figure 1 can be designated a Hierarchical Distributed-Antenna System (H-DAS).

The system in question includes a network controller 5, in which there reside the modules that control operation of the hierarchical system, a set of radio base stations 10, 15 of a conventional type which, by way of non-limiting example, are represented co-allocated in a single location referred to as "Base Station Hotel" designated as a whole by the reference number 20.

As is well known, in UMTS technology, the apparatuses that perform the functions of radio base stations (BTSs) 10, 15 assume the name of Nodes B, whilst the network controller 5 assumes the name of Radio Network Controller (RNC).

The radio base stations 10, 15 are connected through a connection 30 of the Radio Over Fibre (ROF) type to a set of remotized antenna elements 50 (nine in number in the example illustrated in Figure 1) that provide - as better detailed in the following - radio coverage of the terminals of the users of the network. One such terminal, designated T, is shown in Figure 1 as exemplary of the users of the network.

Each antenna element 50 radiates a pair of CPICH beacon channels, corresponding to primary scrambling codes according to W-CDMA technology as described e.g. in T. Ojampera, R. Prasad, "Wideband CDMA for Third Generation Mobile Communications", Artech House, 1998 and 3GPP specification TS 25.213 "Spreading and modulation (FDD)". Each beacon channel can be radiated by one or more antenna elements 50 according to the configuration of the ROF distribution system.

The system in the example appearing in Figure 1 uses a total of eleven beacon channels, divided into two sets:

- the first set is made up of nine beacon channels designated by $PILOT_1$, $PILOT_2$, $PILOT_3$, $PILOT_4$, $PILOT_5$, $PILOT_6$, $PILOT_7$, $PILOT_8$ and $PILOT_9$; each of these channels is radiated by just one of the nine antenna elements 50 of the network exemplified;
- the second set is made up of two beacon channels designated by $PILOT_A$ and $PILOT_B$; each of this beacon channels is radiated by a multiplicity of antenna elements 50; in particular, in the example proposed, the beacon channel $PILOT_A$ is radiated by a group of four (neighbouring) antenna elements 50, whilst the channel $PILOT_B$ is radiated by another group of five (neighbouring) antenna elements 50.

The exemplary eleven beacon channels correspond, from a logic standpoint, to as many individual cells of the cellular mobile-radio system.

In Figure 1 the reference number 40 designates as a whole a set of individual microcells, and the reference number 45 designates as a whole a group of microcells jointly comprising a "virtual macrocell", wherein each microcell constitutes a subcell.

Stated otherwise, with reference to Figure 1, then:

- the cells Cell1, Cell2, Cell3, and Cell4 corresponding to the beacons $PILOT_1$, $PILOT_2$, $PILOT_3$, and $PILOT_4$ are subcells of the virtual macrocell CellA associated to the beacon $PILOT_A$, and are designated as a whole by the reference number 42;
- the cells Cell5, Cell6, Cell17, Cell8, and Cell9 corresponding to the beacons $PILOT_5$, $PILOT_6$, $PILOT_7$, $PILOT_8$ and $PILOT_9$ are subcells of the virtual macrocell CellB associated to the beacon $PILOT_B$, and are designated as a whole by the reference number 44.

It will be promptly appreciated that assigning each (sub)cell to a certain "virtual macrocell" may take place dynamically, whereby a given microcell can be at a certain point of time switched or shifted from a given virtual macrocell to another virtual macrocell in view of e.g. a different nature of service provided or different traffic requirements.

The schematic diagram of Figure 1 can be used in a plurality of configurations, listed below.

In a first configuration, the beacons of the first group and the beacons of the second group are transmitted on different carriers. This solution maximizes the overall capacity both on the uplink and on the downlink. This solution can, however, present critical aspects in the case where the operator has available few UMTS carriers. From the standpoint of radio planning, the introduction of further hierarchical layers, based for example upon conventional macrocells, becomes complex. It is, moreover, necessary to use remote units that are able to manage a pair of carriers (multi-carrier amplifiers) simultaneously.

In an alternative configuration, the beacons of the first group and the beacons of the second group are transmitted on the same carrier. This solution is simpler from the implementation standpoint. As regards the uplink path, in this case, the capacity proves limited by the cells of the second group, which receive interference both from the users allocated thereto and from the users allocated on the cells of the first group. As regards the downlink path the capacity will be limited in that the signals associated to the cells of the first group and the ones associated to the cells of the second group are not mutually orthogonal.

If the beacons of the first group and the beacons of the second group are transmitted on the same carrier, assigned to the virtual macrocells are beacons of a primary type (P-CPICH), whilst assigned to each subcell can be a secondary code (S-CPICH) selected from those associated to the primary code of the virtual macrocell. In this case this solution can exploit measurement reported by the terminal envisaged by the Release 6 of the 3GPP specifications for management of the beamforming.

On the other hand, it is possible not to rely on a secondary code (S-CPICH) associated to a microcell to each single subcell by assigning a P-CPICH code to each microcell. In this way leakage of available P-CPICH can arise, but it is simpler to manage measurements reported by the terminal and it is possible to rely on pre-R6 terminals.

If the beacons of the first group and the beacons of the second group are transmitted on the same carrier, then appropriate modules, given in detail in what follows, enable optimization of the allocation of the radio resources so as to increase the overall capacity of the network. In particular, for a transmission over a dedicated channel, a channelisation code can be assigned on the downlink from the code-tree of the macrocell to each user terminal Tas to minimize the mutual interference between the different transmissions, exploiting both the orthogonality of the codes and the spatial orthogonality. In this case, it is assumed that all the codes allocated on the downlink path belong to the tree for encoding the virtual macrocell.

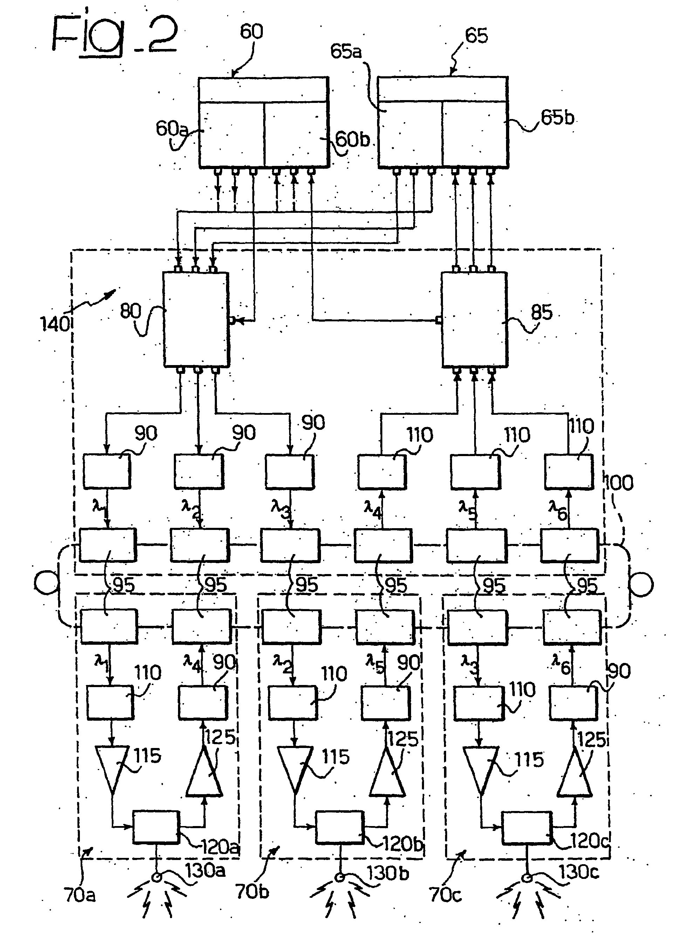

Figure 2 shows an example of the system of Figure 1, based upon an ROF solution of an analogic type.

In particular, Figure 2 shows, by way of non-limiting example, a system made up of two radio base stations BTS 60 and 65 (Node B of UMTS), each of which is able to manage three cells, and of three remote antenna elements (RUs) 70a, 70b, and 70c, each of which corresponds to a radiating point 130a, 130b, and 130c.

Each radio base station 60 and 65 comprises a subsystem 60a and 65a, respectively, which handles transmission of the signals on the downlink path for the three cells, and a subsystem 60b and 65b, respectively, which comprises the apparatus dedicated to reception of the signals on the uplink path.

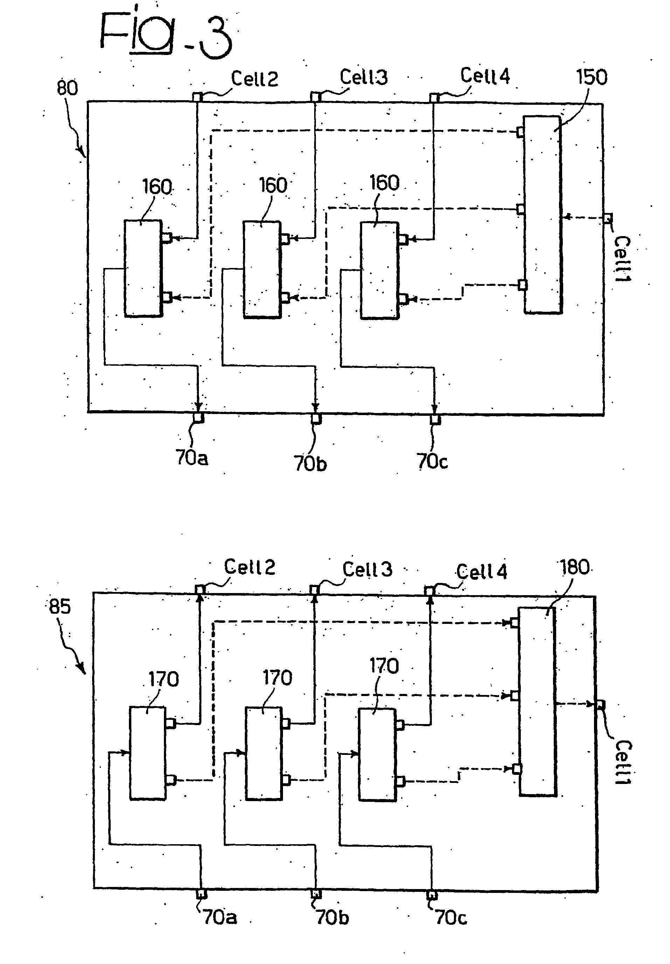

In the case in question, one of the cells associated to the radio base station 60 (designated as cell 1) and all three cells associated to the radio base station 65 (cells 2, 3 and 4) are considered. The cell 1 is distributed (both on the uplink and on the downlink) to all three remote antenna elements 70a, 70b, and 70c and can function as virtual macrocell. The cells 2, 3 and 4 are instead associated each to a remote antenna element 70a, 70b, and 70c and function as subcells of the virtual macrocell. Distribution of the signals from and to the remote antenna elements 70a, 70b, and 70c is achieved by a pair of radio-frequency combinatorial networks. In Figure 2, the combinatorial network for the downlink path is designated by the reference number 80, whilst the combinatorial network for the uplink path is designated by the reference number 85. These two combinatorial networks 80 and 85 are illustrated in detail, for the example proposed, in Figure 3.

As regards the downlink path, the radio-frequency signals directed to the different remote antenna elements 70a, 70b, and 70c are converted into optical signals by means of electro-optical converters 90 and inserted in an optical-fibre ring 100 by means of optical add/drop multiplexer devices, of a known type, designated by the reference number 95. Associated to each signal is a different wavelength ($\lambda_1$, $\lambda_2$, $\lambda_3$, $\lambda_4$, $\lambda_5$, and $\lambda_6$), or optical carrier, on the optical fibre 100, according to the WDM (Wavelength-Division Multiplexing) technique. Each remote antenna element 70a, 70b, and 70c comprises an optical add/drop multiplexer device 95 that "picks up" from the optical fibre 100 the signal (i.e., the optical carrier) corresponding to the remote unit itself. This optical signal is converted into a radio-frequency signal by means of an optical/electrical converter 110, and is then amplified through a power amplifier 115 and sent through a duplexer 120 to the antenna 130 of the remote unit.

On the uplink path the signal coming from the antenna 130 reaches, through the duplexer 120, a low-noise amplifier 125, of a known type, and thence is sent to an electro-optical converter 90. The signal is then launched into the optical fibre 100 through an optical add/drop multiplexer device 95 and picked up in the central unit 140 by means of a second optical add/drop multiplexer device 95.

Figure 3 shows an exemplary structure of the radio-frequency combinatorial networks 80 and 85 used for the distribution of the signals to the remote antenna elements 70a, 70b, and 70c.

As regards the downlink path, the signal associated to the cell 1 is distributed, by means of a splitter 150, to three combiners 160. Each combiner 160 has the function of combining the signal associated to the cell 1 with the signal associated to one of the three cells 2, 3 and 4. The output of each combiner 160 supplies, through the optical-fibre connection 100 of a WDM type described previously, one of the three remote antenna elements 70a, 70b, and 70c present in the example considered. As regards the uplink path, the signals coming from the remote antenna elements 70a, 70b, and 70c reach a set of two-way splitters 170. Each splitter 170 supplies through one of the two outputs, one of the uplink ports of the radio base station 65 corresponding to the cells 2, 3 and 4. The three remaining outputs of the three splitters 170, instead, are recombined by means of a combiner 180, and the resulting signal is transmitted to the uplink port of the radio base station 60 associated to the cell 1.

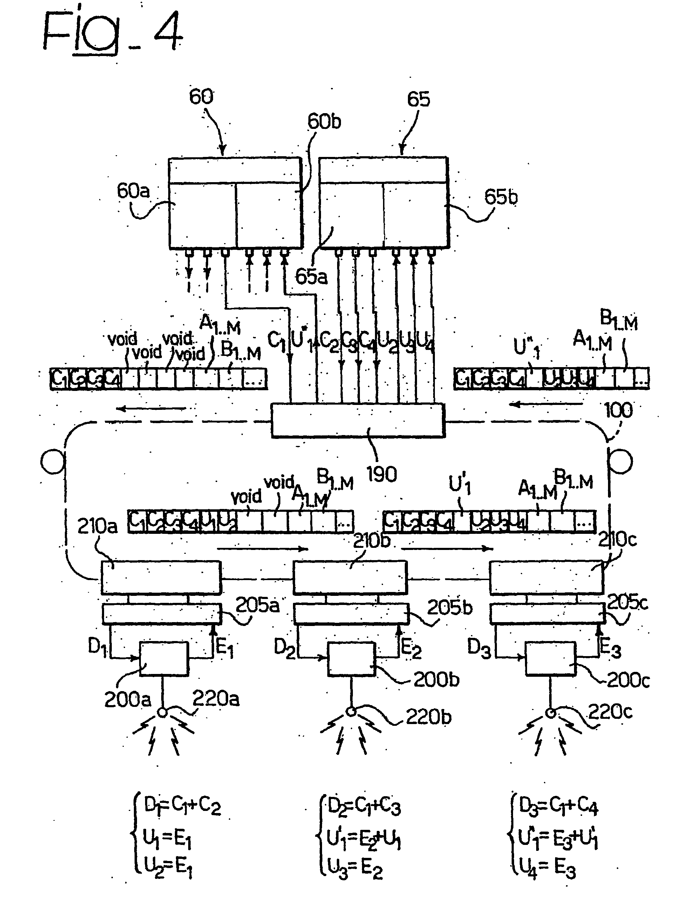

Figure 4 shows an example of embodiment of the system of Figure 1, based upon an ROF solution of a digital type.

Some of the elements already introduced in Figure 2 are shown in Figure 4 designated by the same reference numbers.

In this case, it is assumed that the outputs of the radio base stations 60 and 65 are digital flows of an optical type, for example structured according to the technical directions provided by bodies such as CPRI (Common Public Radio Interface) or OBSAI (Open Base Station Architecture Initiative). Information about these directions can be found at the web sites http://www.cpri.info/ and http://www.obsai.org/.

The network described in Figure 4 provides functions similar to those of the network illustrated in Figure 2, exploiting reconfigurable remote units 200a, 200b, and 200c. On the downlink a mux/demux apparatus 190 sees to introducing, into a single digital frame, the flow $C_1$ coming from the radio base station 60 and the flows $C_2$, $C_3$ and $C_4$ coming from the radio base station 65. This frame is transmitted on the optical fibre 100 according to methodologies of a TDM (Time-Division Multiplexing) type. A R-RRU (Reconfigurable Remote Radio Unit) apparatus 210a of the first remote unit 200a combines the flows $C_1$ and $C_2$ and transmits them to an antenna 220a. Likewise, the second and third remote units 200b and 200c supply their own antennas 220b and 220c, transmitting the flows $C_1+C_3$ and $C_1+C_4$, respectively. As regards the uplink path, the signal transmitted on the optical fibre 100 by the mux/demux 190 contains empty slots (designated as "voids"). The digital flow $F_1$ corresponding to the antenna 220a of the first remote unit 200a is introduced into one of the slots of the frame ($U_1$), whilst its replication is introduced into the slot designated by $U_2$. The second remote unit 200b performs the following functions:

- it introduces the digital flow coming from its own antenna 220b into the frame, using the slot designated by $U_3$ ; and
- it combines the flow $D_2$ with the flow $U_1$ coming from the first remote unit 200a and introduces the result of this recombination into the frame (slot designated by $U'_1$).

The third remote unit 200c likewise performs the following functions:

- it introduces the digital flow coming from its own antenna 220c into the frame, using the slot designated by $U_4$ ; and
- it combines the flow $D_3$ with the flow $U_2$ coming from the second remote unit 200b and introduces the result of this recombination into the frame (slot designated by $U''_1$).

The mux/demux device 190 is reached, then, by flows corresponding to uplink signals. The flow $U''_1$ combines the signals coming from all three remote units 200a, 200b, and 200c and is sent to the radio base station 60. The flows $U_2$, $U_3$, and $U_4$ each correspond to one of the three remote units 200a, 200b, and 200c and are each sent to one of the uplink inputs of the three cells associated to the radio base station 65.

The flow transmitted on the optical fibre also carries the control information $A_{1...N}$ and $B_{1...N}$ used for reconfiguring the R-RRUs 210a, 210b, and 210c so that they provide the recombination functions so far described.

The network described enables a hierarchical distributed-antenna system to be obtained: the cell 1 acts as virtual macrocell, whilst the cells 2, 3 and 4 act as subcells.

The arrangements just described are thus exemplary of embodiments where:

- at least one 60, 65 of the radio base stations in the network is connected to a plurality of antenna elements 70a, 70b, and 70c,
- the radio base station in question jointly co-operates with a first set of the antenna elements 70a, 70b, and 70c to produce an aggregated radio coverage over such a first set of antenna elements 70a, 70b, and 70c, and
- the radio base station distinctly co-operates with a second set of antenna elements 70a, 70b, and 70c to produce individual radio coverages at each antenna element in the second set.

The first and second set of antenna elements considered may be different from each other, fully coincide or, preferably, at least partly coincide.

In the hierarchical system of distributed radio base stations described particular importance is assumed by the modules that determine, via co-operation between the user terminal T and the network, the choice between the layer made up of microcells and the layer made up of virtual macrocells.

Described in detail in what follows, by way of non-limiting example, are some modules for controlling the hierarchy with reference to UMTS, specified by the 3GPP standard. These modules can be distinguished into three categories:

- modules for choice of the layer that act when the terminal is in idle mode; the terminal does not have a signalling radio connection, is identified by the network by means of an IMSI (International Mobile Subscriber Identity) and can receive only broadcast-paging information; this modules act in UE-controlled mode (i.e., it is the terminal that determines the preferential layer for camping);
- modules for choice of the layer that act in the passage from idle mode to connected mode; and
- modules for choice of the layer that act when the terminal is in connected mode.

When the terminal is in idle mode (i.e., the state in which no signalling connection to the network is active), it is possible to control the layer to which the terminal is connected by means of an appropriate tuning of the HCS (Hierarchical Cell Structure) information system. The basic idea employed in the terminal in a hierarchical-cell-structure context, consists in the self-classification by the terminal in a "fast-moving" or "slow-moving" condition, according to a minimum frequency of cell reselection signalled by the network in the system information.

On the basis of this classification the rules executed by the terminal for reselection of the cells are modified, this rules being based fundamentally on the comparison of the signals received on the beacon channels by cells that are adjacent on the basis of thresholds set by the network and modified according to the fast-moving or slow-moving condition. The terminal estimates the average frequency of cell reselection considering the number of cell reselections that have occurred, for example in the form:

$$freq = \frac{\text{number of reselection in the last } T_{est} \text{ seconds}}{T_{est}}$$

If the average reselection frequency is higher than a minimum threshold, the terminal is self-classified as fast-moving; otherwise, it is self-classified as slow-moving. The module of choice of the layer by the terminal is completely specified in the 3GPP specification TS 25.304, "User Equipment (UE) procedures in idle mode and procedures for cell reselection in connected mode". The network operator is left freedom of choice on the parameterizations to use for controlling the camping process.

When the user terminal Trequests access to a given service, the terminal will access the RACH (Random-Access CHannel) on the cell to which it is connected, chosen on the basis of the criteria exemplified. Access to the RACH typically determines passage from idle mode to connected mode. In this step, further modules for choice of the layer can be used, based upon the RRC-signalling information "Measured Results on RACH", described in Table 1, especially if this involves setting-up of a dedicated channel.

In the passage from idle mode to connected mode, the network can infer the degree of mobility (fast-moving rather than slow-moving) from the hierarchical layer (microcell or macrocell) in which the terminal accesses and on the basis of the RRC information "Measured Results on RACH" and obtain information regarding the cells in radio visibility. Table 1 gives the fields of the message "Measured Results on RACH" (from the 3GPP 25.331 specification).

| Information Element/group name | Need | Multi | Type and reference | Semantics description |
|---|---|---|---|---|
| Measurement result for current cell | | | | |
| CHOICE *mode* | MP | | | |
| FDD | | | | |
| CHOICE *measurement quantity* | MP | | | |
| CPICH Ec/N0 | | | Integer (0 ... 50) | In dB |
| CPICH RSCP | | | Integer(0...91) | In dBm |
| Path loss | | | Integer(46..158) | In dB |
| Measurement results for monitored cells | OP | 1 to 7 | | |
| SFN-SFN observed time difference | OP | | SFN-SFN observed time difference 10.3.7.63 | It is absent for current cell |
| FDD | | | | |
| Primary CPICH info | P | | Primary CPICH info 10.3.6.60 | |
| CHOICE *measurement quantity* | P | | | It is absent for current cell |
| CPICH Ec/N0 | | | Integer(-20...0) | In dB |
| CPICH RSCP | | | Integer(-115.-40) | In dBm |
| Path loss | | | Integer(46..158) | In dB |

The network can ask the terminal to provide, by means of this message on the RACH, some additional measurements (Measurement results for monitored cells, SFN-SFN Observed Time Difference, Primary CPICH info, Primary CPICH info, CPICH Ec/N0 or CPICH RSCP or Path loss, the latter alternatively according to the parameter: measurement quantity), in conjunction with the following messages of radio resource control, see 3GPP specification TS 25.331, "Radio Resource Control (RRC) protocol specification" for the following signalling messages: Cell Update, Initial Direct Transfer, Measurement Report, RRC Connection Request, Uplink Direct Transfer.

The use of the information "Measured Results on RACH" and the number of monitored cells reported by the terminal (IE "Maximum number of reported cells on RACH") are configured appropriately.

In particular, the network can ask for the measurements of "Measured Results on RACH" whenever it sends a command for passage to connected mode following upon the message of "RRC CONNECTION REQUEST" from the terminal, for the purpose of improving the degree of knowledge of the conditions of mobility of the terminal, which can contain the measurements corresponding to the CPICH of the cell on which the terminal is connected at the moment of access and of up to seven adjacent cells on the same carrier.

The knowledge of the hierarchical layer and of the measurements on the adjacent cells makes it possible to understand the positioning of the terminal with respect to the limits of coverage by means of distributed-radio base stations and possibly to set one of the network-controlled techniques for management of the DCH (Dedicated Transport Channel) described in what follows.

When there is a service request that the UTRAN (UMTS Terrestrial Radio Access Network) decides to manage through the setting-up of a dedicated channel, various RRM (Measured Results on RACH) techniques of a network-controlled type can be used, which can be exploited individually or else in conjunction, depending upon the type of radio carrier to be set up, upon the instantaneous load, etc.

By way of non-limiting example, described in what follows are the following RRM techniques:

- RRM-1: preferential use of the microcell layer;
- RRM-2: spatial re-use of the channelisation codes associated to the macrocell layer;
- RRM-3: soft handover extended over the microcell layer in conjunction with the site-selection-diversity transmission technique; and
- RRM-4: use of HSDPA in hierarchical distributed-antenna systems.

These techniques are based upon the information on the mobility of the user terminal that can be derived from the measurements on the beacon channel reported by the terminal to the network (e.g., frequency reporting events 1A, 1B and 1C, see 3GPP specification TS 25.331 "Radio Resource Control (RRC) protocol specification"). The processes listed, moreover, have at input, on the basis also of an appropriate configuration of the modalities of management of the UE_CONTROLLED mobility, the following information:

- hierarchical layer on which the terminal has accessed -> implicitly defines the "fast-moving" or "slow-moving" class as resulting from the rules and from the HCS settings;
- "Measured Results on RACH", reported by the terminal as described above: this makes it possible to understand the cells in radio visibility for the terminal; and
- QoS parameters of the RAB (Radio-Access Bearer) requested from UTRAN: for example, the class of the service (chosen from the classes defined by 3GPP: background, interactive, streaming, conversational); these parameters enable unique identification of the RAB for the purpose of discriminating which RRM technique to apply thereto.

Each technique moreover uses additional information for optimal choice of the layer.

The RRM-1 technique (preferential use of the microcell layer) consists in configuring the network so that the microcell layer is used preferentially for transmission on the DCH, with exceptions that can regard specific RABs and/or users classified as high-speed ones. As stated above, it is possible to identify on the basis of the reporting frequency of appropriate measurements supporting mobility (e.g., "Intra-frequency reporting events for FDD" 1A, 1B, 1C, etc.) the degree of mobility of the terminal.

The RRM-1 technique uses as additional input besides the ones described previously, the frequency of reporting of the measurements supporting mobility that identifies a high-mobility mobile equipment, in general depending upon the specific RAB. These thresholds can be rendered a function of the load both of the macrocell layer and of the microcell layer. The load of each cell can be measured in terms, for example, of power transmitted on the downlink or of power received on the uplink.

The working principles of the RRM-1 technique are described hereinafter.

With the exception of the RABs to be managed exclusively on the cellular macrocell layer, upon setting-up of the RAB itself the connection is shifted onto one or more microcells from among the ones reported within the "Measured Results on RACH" signalling according to the rules of macrodiversity set (which can be based upon the CPICH measurements contained within the information of "Measurement results for monitored cells" signalling).

This generalized policy can allow of exceptions according to the load on the uplink path and downlink path of the different cells (viewed as inputs specific to this technique), the layer at which the mobile equipment accesses, and the possibility that amongst the cells reported among those of the measurements of "Measured Results on RACH" there are cells external to the distributed-radio-base-station structure, especially if these belong to a macrocell layer. In this case, especially for mobile equipments that access on the macrocell layer, it may be useful to hold them on the macrocell layer to facilitate a handover to cells external to the distributed-radio-base structure.

Holding of the mobile equipment on the microcell layer can be obtained by appropriately filtering the measurements reported by the terminal so as to identify, from among the cells that are candidates for updating of the active set of the terminal, those belonging to the microcell layer. Moreover this filtering has the purpose of classifying a RAB as "high mobility" and hence managing it on the macrocell layer or otherwise, depending upon the thresholds in terms of reporting frequency and load. An alternative option for management of the terminals that gain access on the macrocell layer is that of associating them initially to the macrocell layer and moving them onto the microcell layer only if the reporting frequency of the measurements supporting mobility drops below the threshold set.

As already highlighted previously, the use of the same carrier for the microcells and for the virtual macrocells can determine limits of capacity due to the lack of orthogonality between the codes attributed to the dedicated channels associated to the scrambling code of the microcell and the codes attributed to the dedicated channels associated to the scrambling code of the virtual macrocell. This problem can be solved by using the RRM-2 technique (spatial re-use of the channelisation codes associated to the macrocell layer). The latter technique envisages the management of some RABs selected, according to the network load, on the microcell layer, but reusing spatially within the structure the channelisation codes associated to the tree of the codes of the macrocell layer. In other words, there is envisaged the use, for the sole purpose of the transmission on the dedicated channel and on the HSDPA channel, of the scrambling code associated to a virtual macrocell also for the microcells corresponding thereto (subcells). At each emission point (antenna), there is therefore associated a subpart of the tree of the channelisation codes of the virtual macrocell, it being possible for this macrocell subtree to be reused at a distance within the area of coverage of the virtual macrocell itself. The identification of the subtree, within which to choose the code to be associated for a dedicated channel, takes place on the basis of the measurements supporting mobility reported by the terminal which enable identification of the "privileged" emission points on the basis of the unique association between emission point and beacon channel for the microcell layer.

The above technique uses the following additional inputs besides the ones mentioned previously, common to all the techniques described:

- channelisation codes to be used for each RF header, identifiable uniquely by the emission point/beacon channel association of the microcell layer; and
- indication of the RABs to be managed with this technique, possibly in a way depending upon:
- uplink load or downlink load on the microcell and macrocell layers; and
- classification of the terminal as "high-mobility" terminal on the basis of the camping layer at the moment of access to the RACH and/or classification of the methodologies of management previously illustrated (for example: RRM-1 technique, which envisages the preferential use of the microcell layer).

The RRM-3 technique (soft handover extended over the microcell layer in conjunction with the Site Selection Diversity Transmission technique) has the aim of maximizing the gain of macrodiversity associated to the transmission on the dedicated channel (both on the uplink and on the downlink). This technique consists in management of some RABs that are associated to the microcell layer (for example on the basis of the RRM-1 technique), activating the macrodiversity on a very large number of microcells (for example, more than six). The 3GPP standard envisages that the terminal will support a maximum dimension of the active set of at least six cells (see the 3GPP TS 25.133 specification, "Requirements for support of radio resource management (FDD)).

The extensive use of macrodiversity, however, can lead to an increase in the downlink interference, since the information associated to a single dedicated channel is transmitted - on the downlink - by all the cells in macrodiversity.

The "Site Selection Diversity Transmission" function, which has been mandatory in the terminal ever since Release 99 of 3GPP (see, in particular, the 3GPP TS 25.214 specification, "Physical layer procedures (FDD)) enables solution of this problem. On the basis of this technique the control channel DPCCH (Dedicated Physical Control Channel) is transmitted by all the cells in macrodiversity, whilst the data channel DPDCH (Dedicated Physical Data Channel) is transmitted only by one of the cells in macrodiversity, which is chosen dynamically by the terminal using physical-level bits contained in the channel DPCCH.

In particular, in order to select the cell to be considered as primary cell, a code is assigned to each cell which the terminal uses to identify the cell that it receives with the highest quality on the FBI field of the uplink channel DPCCH.

The RRM-4 technique consists in the use of the HSDPA (High-Speed Downlink Packet Access) within the hierarchical distributed-antenna system. The HSDPA technique, introduced in Release 5 of the 3GPP standard, envisages the use of a "shared" physical channel, referred to as HS-DSCH (High-Speed Downlink Shared Channel) and constituted by a part of the set of codes available in a cell. This codeset is, in practice, used as a shared resource between a number of time-division users. In this case, the resources in terms of codes and downlink power are assigned with dynamic scheduling to a user, only if data are to be effectively transmitted. According to the type of service, this technique can guarantee a more efficient use of the radio resources as compared to data transmission on a dedicated channel. The users handled with this transmission technique in any case maintain a dedicated channel assigned to them, which is typically at a low bit rate and is used, for example, for carrying signalling information. This RRM technique hence controls management of the assignment of the dedicated channel and of the transmission of the channel HS-DSCH.

The procedures of mobility in the case of HSDPA envisage for a given UE the reception of the channel HS-DSCH only from an individual cell within the active set associated to the channel DCH allocated to the terminal. The procedure for "serving HS-DSCH cell change" enables transfer of the serving HS-DSCH radio link from the serving cell to a data link belonging to a target cell which will in turn become a serving cell, replacing the previous one.

The procedure of "serving HS-DSCH cell change", which determines the change of the serving cell from the HSDPA standpoint, is of a network-controlled type, i.e., it is the network that decides what is to be the new target HS-DSCH cell. This management of the mobility can be based upon measurements made by the terminal and other information available in the network as in the case of normal handover procedures envisaged for the channel DCH and obtained by signalling of the RRC level (for example, an RRC message "Physical Channel Reconfiguration" can be used which includes the parameters of HS-DSCH).

Within a hierarchical system, the choice of the optimal layer for a terminal that uses HSDPA is based upon the thresholds associated to the use of the codes and on the measurement of the power available for HSDPA for each individual layer.

In other words, thresholds are defined for occupation of the codes and for the power used for the downlink transmission, which, compared with the point value of code and power occupation, uniquely discriminate the microcell or macrocell layer from which to transmit/receive the channel HS- DSCH while the terminal is moving.

Furthermore, the technique of management of the codes associated to the virtual macrocells (the RRM-3 technique, described previously) can be extended also to the HSDPA.

The RRM-4 technique uses the following additional inputs besides the ones mentioned previously, common to all the techniques described:

- metrics on the use of the codes and of the power available for HSDPA for each individual layer;
- thresholds in terms of use of the channelisation codes and on the measurement of the downlink power available for HSDPA for each individual cell, by virtue of which the transmission of HSDPA by a macrocell layer or microcell layer is to be privileged; and
- if the RRM-4 technique is used in association with the RRM-3 technique, it is necessary to specify the channelisation codes to use for each RF header for HSDPA, which can be identified uniquely by the emission point/beacon channels association of the microcell layer.

In addition to the network-controlled techniques so far described, it is possible to use, also in connected mode, techniques of a UE-controlled type. In this case, the terminal reselects the cell from which to listen to the information transmitted by the common channels with the procedures of cell (re)selection in connected mode described by the 3GPP specification TS 25.304, "User Equipment (UE) procedures in idle mode and procedures for cell reselection in connected mode". In particular, if the terminal is maintained in the RRC states CELL_PCH and CELL_FACH (not URA_PCH) it signals the change of cell with the message of CELL_UPDATED, which also, as highlighted above, contains the field "Measured Results on RACH" and thus enables the network to obtain, from the terminal, information on the adjacent cells, information which is functional for optimization in setting up a dedicated transport channel, according to the network-controlled modalities so far described.

Without prejudice to the underlying principles of the invention, the details of implementation and the embodiments may vary, even significantly, with respect to what is described and illustrated herein, purely by way of non-limiting example, without thereby departing from the scope of the invention, as defined by the annexed claims.

**Claims**

1.  A method of providing radio coverage in a mobile-radio network including radio base stations (60, 65) and antenna elements (50; 70a, 70b, and 70c) providing radio coverage to the users (T) of said network, the method including the steps of:

    - equipping said antenna elements (50; 70a, 70b, and 70c) for communication over at least one first communication channel ($PILOT_1$, ..., $PILOT_9$) providing a first layer of individual radio coverage for said antenna elements (50; 70a, 70b, and 70c), and at least one second communication channel ($PILOT_A$, $PILOT_B$), and
    - making said at least one second communication channel ($PILOT_A$, $PILOT_B$) common to at least one group (42, 44) of said antenna elements (50; 70a, 70b, and 70c) to provide a second layer of radio coverage aggregating the radio coverages of the antenna elements (50; 70a, 70b, and 70c) included in said at least one group (42, 44), **characterised in that** it includes the following steps:
    - connecting at least two (60, 65) of said radio base stations to a plurality of antenna elements (70a, 70b, and 70c) to produce a distributed antenna system,
    - causing a first one of said radio base stations to jointly co-operate with a first set of said antenna elements (70a, 70b, and 70c) of said plurality to produce an aggregated radio coverage over said first set of antenna elements (70a, 70b, and 70c), and
    - causing a second one of said radio base stations to distinctly co-operate with a second set of said antenna elements (70a, 70b, and 70c) of said plurality to produce individual radio coverages at each antenna element (70a, 70b, and 70c) of said second set, said second set of said antenna elements at least partly coinciding with said first set of said antenna elements.

2.  The method of claim 1, **characterised in that** it includes the steps of:

    - providing a plurality of said second communication channels ($PILOT_A$, $PILOT_B$), and
    - making each said second communication channel ($PILOT_A$, $PILOT_B$) in said plurality common to a respective group (42, 44) of said antenna elements (50; 70a, 70b, and 70c)), whereby said second layer of radio coverage is partitioned in virtual cells each said virtual cell aggregating the radio coverages of the antenna elements (50; 70a, 70b, and 70c) included in said respective group (42, 44).

3.  The method of claim 2, **characterised in that** it includes the steps of:

    - equipping at least one of said antenna elements (50; 70a, 70b, and 70c) with a plurality of said second communication channels ($PILOT_A$, $PILOT_B$), and
    - causing said at least one of said antenna elements (50; 70a, 70b, and 70c) to selectively make said second communication channels (PILOT$_A$, PILOT$_B$) in said plurality common to different respective groups (42, 44) of antenna elements (50; 70a, 70b, and 70c).

4. The method of claim 1, **characterised in that** it includes the step of connecting said antenna elements (50; 70a, 70b, and 70c) in a Radio Over Fibre (ROF) arrangement.

5. A mobile-radio network including radio base stations (60, 65) and antenna elements (50; 70a, 70b, and 70c) providing radio coverage to the users (T) of said network, wherein:

   - said antenna elements (50; 70a, 70b, and 70c) are equipped for communication over at least one first communication channel (PILOT$_1$, ..., PILOT$_9$) providing a first layer of individual radio coverage for said antenna elements (50; 70a, 70b, and 70c), and at least one second communication channel (PILOT$_A$, PILOT$_B$), and
   - said at least one second communication channel (PILOT$_A$, PILOT$_B$) is common to at least one group (42, 44) of said antenna elements (50; 70a, 70b, and 70c) to provide a second layer of radio coverage aggregating the radio coverages of the antenna elements (50; 70a, 70b, and 70c) included in said at least one group (42, 44), **characterised in that**:
   - at least two (60, 65) of said radio base stations are connected to a plurality of antenna elements (70a, 70b, and 70c) to produce a distributed antenna system,
   - a first one (60, 65) of said radio base stations jointly co-operates with a first set of said antenna elements (70a, 70b, and 70c) of said plurality to produce an aggregated radio coverage over said first set of antenna elements (70a, 70b, and 70c), and
   - a second one (60, 65) of said radio base stations distinctly co-operates with a second set of said antenna elements (70a, 70b, and 70c) of said plurality to produce individual radio coverages at each antenna element (70a, 70b, and 70c) of said second set, said second set of said antenna elements at least partly coinciding with said first set of said antenna elements.

6. The network of claim 5, **characterised in that** said at least one group includes neighbouring antenna elements (50; 70a, 70b, and 70c) in said mobile-radio network.

7. The network of claim 5, **characterised in that** it includes a plurality of said second communication channels (PILOT$_A$, PILOT$_B$), each said second communication channel (PILOT$_A$, PILOT$_B$) in said plurality being common to a respective group (42, 44) of said antenna elements (50; 70a, 70b, and 70c)), whereby said second layer of radio coverage is partitioned in virtual cells each said virtual cell aggregating the radio coverages of the antenna elements (50; 70a, 70b, and 70c) included in said respective group (42, 44).

8. The network of claim 7, **characterised in that**:

   - at least one of said antenna elements (50; 70a, 70b, and 70c) is equipped for communication over a plurality of said second communication channels (PILOT$_A$, PILOT$_B$), whereby said at least one of said antenna elements (50; 70a, 70b, and 70c) is configured for selectively making said second communication channels (PILOT$_A$, PILOT$_B$) in said plurality common to different respective groups (42, 44) of antenna elements (50; 70a, 70b, and 70c).

9. The network of claim 5, **characterised in that** said at least one first communication channel (PILOT$_1$, ..., PILOT$_9$) and said at least one second communication channel (PILOT$_A$, PILOT$_B$) use different carriers.

10. The network of claim 5, **characterised in that** said at least one first communication channel (PILOT$_1$, ..., PILOT$_9$) and said at least one second communication channel (PILOT$_A$, PILOT$_B$) use the same carrier and different codes.

11. The network of claim 5, **characterised in that**:

   - said different codes are codes for Code Division Multiple Access (CDMA) communications including a primary code (P-CPICH) as well as a set of secondary codes (S-CPICH) associated to said primary code (P-CPICH),
   - said at least one second communication channel (PILOT$_A$, PILOT$_B$) uses said primary code (P-CPICH), and
   - said at least one first communication channel (PILOT$_1$, ..., PILOT$_9$) uses a secondary code (S-CPICH) selected out of said secondary codes (S-CPICH) associated to said primary code (P-CPICH).

12. The network of claim 10, **characterised in that** said different codes are a set of primary codes (P-CPICH) for Code Division Multiple Access (CDMA) communications.

13. The network of claim 10, **characterised in that** said different codes are codes taken from a common tree of orthogonal codes for Code Division Multiple Access (CDMA) communications.

14. The network of claim 10, **characterised in that** at least two non-neighbouring antenna elements (50; 70a, 70b, and 70c) included in said at least one group use the same code for said first communication channel.

15. The network of claim 5, **characterised in that** said antenna elements (50; 70a, 70b, and 70c) are connected in a Radio Over Fibre (ROF) arrangement.

16. A computer program product, loadable in the memory of at least one computer and including software code portions for performing the method of any of claims 1 to 4.


**Patentansprüche**

1. Verfahren zum Bereitstellen einer Funkabdeckung in einem mobilen Funknetzwerk mit Funkbasisstationen (60, 65) und Antennenelementen (50; 70a, 70b und 70c), die eine Funkabdeckung für Nutzer (T) des Netzwerkes bereitstellen, wobei das Verfahren die folgenden Schritte aufweist:

   - Ausrüsten der Antennenelemente (50; 70a, 70b und 70c) zur Kommunikation über zumindest einen ersten Kommunikationskanal ($PILOT_1$, ..., $PILOT_9$), der eine erste Schicht einer individuellen Funkabdeckung für die Antennenelemente (50; 70a, 70b und 70c) bereitstellt, und zumindest einen zweiten Kommunikationskanal ($PILOT_A$, $PILOT_B$), und
   - Veranlassen, dass der zumindest eine zweite Kommunikationskanal ($PILOT_A$, $PILOT_B$) gemeinsam ist für zumindest eine Gruppe (42, 44) von Antennenelementen (50; 70a, 70b und 70c), um eine zweite Schicht der Funkabdeckung bereitzustellen, die aus den Funkabdeckungen der Antennenelemente (50; 70a, 70b und 70c), die in der zumindest einen Gruppe (42, 44) umfasst sind, zusammengesetzt ist,
   **dadurch gekennzeichnet, dass** es die folgenden Schritte umfasst:
   - Verbinden von zumindest zwei (60, 65) der Funkbasisstationen zu einer Vielzahl von Antennenelementen (70a, 70b und 70c), um ein verteiltes Antennensystem zu erzeugen,
   - Veranlassen einer ersten der Funkbasisstationen zum gemeinsamen Zusammenarbeiten mit einem ersten Satz der Antennenelemente (70a, 70b und 70c) aus der Vielzahl, um eine zusammengesetzte Funkabdeckung über den ersten Satz der Antennenelemente (70a, 70b und 70c) zu erzeugen, und
   - Veranlassen einer zweiten der Funkbasisstationen zum ausschließlichen Zusammenarbeiten mit einem zweiten Satz der Antennenelemente (70a, 70b und 70c) aus der Vielzahl, um individuelle Funkabdeckungen für jedes der Antennenelemente (70a, 70b und 70c) aus dem zweiten Satz zu erzeugen, wobei der zweite Satz der Antennenelemente zumindest teilweise mit dem ersten Satz der Antennenelemente übereinstimmt.

2. Verfahren nach Anspruch 1, **dadurch gekennzeichnet, dass** es die folgenden Schritte umfasst:

   - Bereitstellen einer Menge der zweiten Kommunikationskanäle ($PILOT_A$, $PILOT_B$), und
   - Veranlassen, dass jeder der zweiten Kommunikationskanäle ($PILOT_A$, $PILOT_B$) aus der Menge für eine entsprechende Gruppe (42, 44) der Antennenelemente (50; 70a, 70b und 70c) gemeinsam ist, wodurch die zweite Schicht der Funkabdeckung in virtuelle Zellen eingeteilt wird, wobei jede der virtuellen Zellen die Funkabdeckungen der Antennenelemente (50; 70a, 70b und 70c), die in der entsprechenden Gruppe (42, 44) sind, zusammenfügt.

3. Verfahren nach Anspruch 2, **dadurch gekennzeichnet, dass** es die folgenden Schritte umfasst:

   - Ausrüsten zumindest eines der Antennenelemente (50; 70a, 70b und 70c) mit einer Menge von zweiten Kommunikationskanälen ($PILOT_A$, $PILOT_B$), und
   - Bewirken, dass der zumindest eine der Antennenelemente (50; 70a, 70b und 70c) selektiv die zweiten Kommunikationskanäle ($PILOT_A$, $PILOT_B$) aus der Menge für unterschiedliche entsprechende Gruppen (42, 44) von Antennenelemente (50; 70a, 70b und 70c) gemeinsam macht.

**4.** Verfahren nach Anspruch 1, **dadurch gekennzeichnet, dass** es den Schritt eines Verbindens der Antennenelemente (50; 70a, 70b und 70c) in einer Funk-über-Faser (ROF)-Anordnung aufweist.

**5.** Mobiles Funknetzwerk mit Funkbasisstationen (60, 65) und Antennenelementen (50; 70a, 70b und 70c), die eine Funkabdeckung für Nutzer (T) des Netzwerkes bereitstellen, wobei:

- die Antennenelemente (50; 70a, 70b und 70c) ausgerüstet sind zur Kommunikation über zumindest einen ersten Kommunikationskanal ($PILOT_1$, ..., $PILOT_9$), der eine erste Schicht einer individuellen Funkabdeckung für die Antennenelemente (50; 70a, 70b und 70c) bereitstellt, und zumindest einen zweiten Kommunikationskanal ($PILOT_A$, $PILOT_B$), und
- der zumindest eine zweite Kommunikationskanal ($PILOT_A$, $PILOT_B$) gemeinsam für zumindest eine Gruppe (42, 44) der Antennenelemente (50; 70a, 70b und 70c) ist, um eine zweite Schicht der Funkabdeckung bereitzustellen, die die Funkabdeckungen der Antennenelemente (50; 70a, 70b und 70c) zusammenfügt, die in der zumindest einen Gruppe (42, 44) umfasst sind,

**dadurch gekennzeichnet, dass**:
- zumindest zwei (60, 65) der Funkbasisstationen mit einer Vielzahl von Antennenelementen (70a, 70b und 70c) verbunden sind, um ein verteiltes Antennensystem zu erzeugen,
- ein erstes (60, 65) der Funkbasisstationen gemeinsam mit einem ersten Satz der Antennenelemente (70a, 70b und 70c) aus der Vielzahl zusammenarbeitet, um eine zusammengesetzte Funkabdeckung über den ersten Satz von Antennenelementen (70a, 70b und 70c) zu erzeugen, und
- eine zweite (60, 65) der Funkbasisstationen ausschließlich mit einem zweiten Satz der Antennenelemente (70a, 70b und 70c) aus der Vielzahl zusammenarbeitet, um individuelle Funkabdeckungen an jedem Antennenelement (70a, 70b und 70c) aus dem zweiten Satz zu erzeugen, wobei der zweite Satz der Antennenelemente zumindest teilweise mit dem ersten Satz der Antennenelemente übereinstimmt.

**6.** Netzwerk nach Anspruch 5, **dadurch gekennzeichnet, dass** die zumindest eine Gruppe benachbarter Antennenelemente (50; 70a, 70b und 70c) aus dem mobilen Funknetzwerk umfasst.

**7.** Netzwerk nach Anspruch 5, **dadurch gekennzeichnet, dass** es eine Menge von zweiten Kommunikationskanälen ($PILOT_A$, $PILOT_B$) umfasst, wobei jeder der zweiten Kommunikationskanäle ($PILOT_A$, $PILOT_B$) aus der Menge gemeinsam für eine entsprechende Gruppe (42, 44) der Antennenelemente (50; 70a, 70b und 70c) ist, wodurch die zweite Schicht der Funkabdeckung in virtuelle Zellen eingeteilt wird, wovon jede virtuelle Zelle die Funkabdeckungen der Antennenelemente (50; 70a, 70b und 70c), die in der entsprechenden Gruppe (42, 44) umfasst sind, zusammenfügt.

**8.** Netzwerk nach Anspruch 7, **dadurch gekennzeichnet, dass**:

- zumindest eines der Antennenelemente (50; 70a, 70b und 70c) zur Kommunikation über eine Menge von den zweiten Kommunikationskanälen ($PILOT_A$, $PILOT_B$) ausgerüstet ist, wodurch das zumindest eine der Antennenelemente (50; 70a, 70b und 70c) ausgebildet sind, um selektiv die zweiten Kommunikationskanäle ($PILOT_A$, $PILOT_B$) aus der Menge für entsprechende unterschiedliche Gruppen (42, 44) der Antennenelemente (50; 70a, 70b und 70c) gemeinsam zu machen.

**9.** Netzwerk nach Anspruch 5, **dadurch gekennzeichnet, dass** zumindest ein erster Kommunikationskanal ($PILOT_1$, ..., $PILOT_9$) und der zumindest eine zweite Kommunikationskanal ($PILOT_A$, $PILOT_B$) unterschiedliche Träger nutzen.

**10.** Netzwerk nach Anspruch 5, **dadurch gekennzeichnet, dass** der zumindest eine erste Kommunikationskanal ($PILOT_1$, ..., $PILOT_9$) und der zumindest eine zweite Kommunikationskanal ($PILOT_A$, $PILOT_B$) den gleichen Träger und unterschiedliche Codes nutzen.

**11.** Netzwerk nach Anspruch 5, **dadurch gekennzeichnet, dass**:

- die unterschiedlichen Codes Codes für die Code-Teilungs-Mehrfachzugang (CDMA)-Kommunikationen sind, die einen Primärcode (P-CPICH) als auch einen Satz von Sekundärcodes (S-CPICH) aufweisen, die entsprechend zu dem Primärcode (P-CPICH) gehören,
- der zumindest eine zweite Kommunikationskanal ($PILOT_A$, $PILOT_B$) den Primärcode (P-CPICH) nutzt, und
- der zumindest eine erste Kommunikationskanal ($PILOT_1$, ..., $PILOT_9$) einen Sekundärcode (S-CPICH) nutzt, der ausgewählt ist aus den Sekundärcodes (S-CPICH), die zu dem Primärcode (P-CPICH) gehören.

12. Netzwerk nach Anspruch 10, **dadurch gekennzeichnet, dass** die unterschiedlichen Codes einen Satz von Primärcodes (P-CPICH) für Code-Teilungs-Mehrfachzugang (CDMA)-Kommunikationen sind.

13. Netzwerk nach Anspruch 19, **dadurch gekennzeichnet, dass** die unterschiedlichen Codes Codes sind, die von einem gemeinsamen Baum von orthogonalen Codes für das Code-Teilungs-Mehrfachzugang-Kommunikationen (CDMA) genommen wurden.

14. Netzwerk nach Anspruch 10, **dadurch gekennzeichnet, dass** zumindest zwei nichtbenachbarte Antennenelemente (50; 70a, 70b und 70c), die in der zumindest einen Gruppe enthalten sind, den gleichen Code für den ersten Kommunikationskanal nutzen.

15. Netzwerk nach Anspruch 5, **dadurch gekennzeichnet, dass** die Antennenelemente (50; 70a, 70b und 70c) durch eine Funk-über-Faser (ROF)-Anordnung verbunden sind.

16. Computerprogrammprodukt, welches in einen Speicher von zumindest einem Computer ladbar ist und Softwarecode-Anteile aufweist, um das Verfahren nach einem der Ansprüche 1 bis 4 auszuführen.

## Revendications

1. Procédé de fourniture de couverture radio dans un réseau radio mobile comprenant des stations de base radio (60, 65) et des éléments d'antennes (50 ; 70a, 70b, et 70c) fournissant une couverture radio aux utilisateurs (T) dudit réseau, le procédé comprenant les étapes pour :

   - équiper lesdits éléments d'antennes (50 ; 70a, 70b, et 70c) pour une communication sur au moins un premier canal de communication (PILOT$_1$, ..., PILOT$_9$) fournissant une première couche de couverture radio individuelle pour lesdits éléments d'antennes (50 ; 70a, 70b, et 70c), et au moins un deuxième canal de communication (PILOT$_A$, PILOT$_B$), et
   - rendre ledit au moins un deuxième canal de communication (PILOT$_A$, PILOT$_B$) commun à au moins un groupe (42, 44) desdits éléments d'antennes (50 ; 70a, 70b, et 70c) pour fournir une deuxième couche de couverture radio regroupant les couvertures radio des éléments d'antennes (50 ; 70a, 70b, et 70c) inclus dans ledit au moins un groupe (42, 44),
   **caractérisé en ce qu'**il comprend les étapes suivantes :
   - connecter au moins deux (60, 65) desdites stations de base radio à une pluralité d'éléments d'antennes (70a, 70b, et 70c) pour produire un système d'antennes distribuées,
   - faire en sorte qu'une première desdites stations de base radio coopère conjointement avec un premier jeu desdits éléments d'antennes (70a, 70b, et 70c) parmi ladite pluralité pour produire une couverture radio regroupée sur ledit premier jeu d'éléments d'antennes (70a, 70b, et 70c), et
   - faire en sorte qu'une deuxième desdites stations de base radio coopère distinctement avec un deuxième jeu desdits éléments d'antennes (70a, 70b, et 70c) parmi ladite pluralité pour produire des couvertures radio individuelles à chaque élément d'antenne (70a, 70b, et 70c) dudit deuxième jeu, ledit deuxième jeu desdits éléments d'antennes coïncidant au moins partiellement avec ledit premier jeu desdits éléments d'antennes.

2. Procédé selon la revendication 1, **caractérisé en ce qu'**il comprend les étapes pour :

   - fournir une pluralité desdits deuxièmes canaux de communication (PILOT$_A$, PILOT$_B$), et
   - rendre chacun desdits deuxièmes canaux de communication (PILOT$_A$, PILOT$_B$) dans ladite pluralité commun à un groupe respectif (42, 44) desdits éléments d'antennes (50 ; 70a, 70b, et 70c)), par laquelle ladite deuxième couche de couverture radio est divisée en cellules virtuelles, chacune desdites cellules virtuelles regroupant les couvertures radio des éléments d'antennes (50 ; 70a, 70b, et 70c) inclus dans ledit groupe respectif (42, 44).

3. Procédé selon la revendication 2, **caractérisé en ce qu'**il comprend les étapes pour :

   - équiper au moins un desdits éléments d' antennes (50 ; 70a, 70b, et 70c) avec une pluralité desdits deuxièmes canaux de communication (PILOT$_A$, PILOT$_B$), et
   - faire en sorte que ledit au moins un desdits éléments d'antennes (50 ; 70a, 70b, et 70c) rende sélectivement lesdits deuxièmes canaux de communication (PILOT$_A$, PILOT$_B$) dans ladite pluralité communs à des groupes respectifs différents (42, 44) d'éléments d'antennes (50 ; 70a, 70b, et 70c).

4. Procédé selon la revendication 1, **caractérisé en ce qu'**il comprend l'étape de connecter desdits éléments d'antennes (50 ; 70a, 70b, et 70c) dans un agencement radio sur fibre (« Radio Over Fibre » ou ROF).

5. Réseau radio mobile comprenant des stations de base radio (60, 65) et des éléments d'antennes (50 ; 70a, 70b, et 70c) fournissant une couverture radio aux utilisateurs (T) dudit réseau, dans lequel :

- lesdits éléments d'antennes (50 ; 70a, 70b, et 70c) sont équipés pour une communication sur au moins un premier canal de communication (PILOT$_1$, ..., PILOT$_9$) fournissant une première couche de couverture radio individuelle pour lesdits éléments d'antennes (50 ; 70a, 70b, et 70c), et au moins un deuxième canal de communication (PILOT$_A$, PILOT$_B$), et
- ledit au moins un deuxième canal de communication (PILOT$_A$, PILOT$_B$) est commun à au moins un groupe (42, 44) desdits éléments d'antennes (50 ; 70a, 70b, et 70c) pour fournir une deuxième couche de couverture radio regroupant les couvertures radio des éléments d'antennes (50 ; 70a, 70b, et 70c) inclus dans ledit au moins un groupe (42, 44),
**caractérisé en ce que** :
- au moins deux (60, 65) desdites stations de base radio sont connectées à une pluralité d'éléments d'antennes (70a, 70b, et 70c) pour produire un système d'antennes distribuées,
- une première (60, 65) desdites stations de base radio coopère conjointement avec un premier jeu desdits éléments d'antennes (70a, 70b, et 70c) parmi ladite pluralité pour produire une couverture radio regroupée sur ledit premier jeu d'éléments d'antennes (70a, 70b, et 70c), et
- une deuxième (60, 65) desdites stations de base radio coopère distinctement avec un deuxième jeu desdits éléments d'antennes (70a, 70b, et 70c) parmi ladite pluralité pour produire des couvertures radio individuelles à chaque élément d'antenne (70a, 70b, et 70c) dudit deuxième jeu, ledit deuxième jeu desdits éléments d'antennes coïncidant au moins partiellement avec ledit premier jeu desdits éléments d'antennes.

6. Réseau selon la revendication 5, **caractérisé en ce que** ledit au moins un groupe comprend des éléments d'antennes voisins (50 ; 70a, 70b, et 70c) dans ledit réseau radio mobile.

7. Réseau selon la revendication 5, **caractérisé en ce qu'**il comprend une pluralité desdits deuxièmes canaux de communication (PILOT$_A$, PILOT$_B$), chacun desdits deuxièmes canaux de communication (PILOT$_A$, PILOT$_B$) dans ladite pluralité étant commun à un groupe respectif (42, 44) desdits éléments d'antennes (50 ; 70a, 70b, et 70c)), par laquelle ladite deuxième couche de couverture radio est divisée en cellules virtuelles, chacune desdites cellules virtuelles regroupant les couvertures radio des éléments d'antennes (50 ; 70a, 70b, et 70c) inclus dans ledit groupe respectif (42, 44).

8. Réseau selon la revendication 7, **caractérisé en ce que** :

- au moins un desdits éléments d'antennes (50 ; 70a, 70b, et 70c) est équipé pour une communication sur une pluralité desdits deuxièmes canaux de communication (PILOT$_A$, PILOT$_B$), par laquelle ledit au moins un desdits éléments d'antennes (50 ; 70a, 70b, et 70c) est configuré pour rendre sélectivement lesdits deuxièmes canaux de communication (PILOT$_A$, PILOT$_B$) dans ladite pluralité communs à des groupes respectifs différents (42, 44) d'éléments d'antennes (50 ; 70a, 70b, et 70c).

9. Réseau selon la revendication 5, **caractérisé en ce que** ledit au moins un premier canal de communication (PILOT$_1$, ..., PILOT$_9$) et ledit au moins un deuxième canal de communication (PILOT$_A$, PILOT$_B$) utilisent des porteuses différentes.

10. Réseau selon la revendication 5, **caractérisé en ce que** ledit au moins un premier canal de communication (PILOT$_1$, ..., PILOT$_9$) et ledit au moins un deuxième canal de communication (PILOT$_A$, PILOT$_B$) utilisent la même porteuse et des codes différents.

11. Réseau selon la revendication 5, **caractérisé en ce que** :

- lesdits codes différents sont des codes pour des communications à accès multiple par répartition en code (« Code Division Multiple Access » ou CDMA) comprenant un code primaire (P-CPICH) ainsi qu'un jeu de codes deuxièmeaires (S-CPICH) associés audit code primaire (P-CPICH),
- ledit au moins un deuxième canal de communication (PILOT$_A$, PILOT$_B$) utilise ledit code primaire (P-CPICH), et
- ledit au moins un premier canal de communication (PILOT$_1$, ..., PILOT$_9$) utilise un code deuxièmeaire (S-CPICH) sélectionné parmi lesdits codes deuxièmeaires (S-CPICH) associés audit code primaire (P-CPICH).

12. Réseau selon la revendication 10, **caractérisé en ce que** lesdits codes différents sont un jeu de codes primaires (P-CPICH) pour des communications à accès multiple par répartition en code (« Code Division Multiple Access » ou CDMA).

13. Réseau selon la revendication 10, **caractérisé en ce que** lesdits codes différents sont des codes pris à partir d'un arbre commun de codes orthogonaux pour des communications à accès multiple par répartition en code (« Code Division Multiple Access » ou CDMA).

14. Réseau selon la revendication 10, **caractérisé en ce qu'**au moins deux éléments d'antennes non voisins (50 ; 70a, 70b, et 70c) inclus dans ledit au moins un groupe utilisent le même code pour ledit premier canal de communication.

15. Réseau selon la revendication 5, **caractérisé en ce que** lesdits éléments d'antennes (50 ; 70a, 70b, et 70c) sont connectés dans un agencement radio sur fibre (« Radio Over Fibre » ou ROF).

16. Produit programme d'ordinateur, chargeable dans la mémoire d'au moins un ordinateur et comprenant des parties codes de logiciel pour réaliser le procédé selon une quelconque des revendications 1 à 4.

# Fig _ 1

Fig.2

# Fig -3

# Fig_4

$$\begin{cases} D_1 = C_1 + C_2 \\ U_1' = E_1 \\ U_2 = E_1 \end{cases} \qquad \begin{cases} D_2 = C_1 + C_3 \\ U_1'' = E_2 + U_1' \\ U_3 = E_2 \end{cases} \qquad \begin{cases} D_3 = C_1 + C_4 \\ U_1''' = E_3 + U_1'' \\ U_4 = E_3 \end{cases}$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5265263 A
- EP 0391597 A
- US 5627879 A
- US 6308085 B

**Non-patent literature cited in the description**

- **J. LAIHO et al.** *Radio Network Planning and Optimisation for UMTS,* 2001, 322-325
- **T. OJAMPERA ; R. PRASAD.** Wideband CDMA for Third Generation Mobile Communications. Artech House, 1998, 252-253
- **T. OJAMPERA ; R. PRASAD.** Wideband CDMA for Third Generation Mobile Communications. Artech House, 1998
- Spreading and modulation (FDD. *3GPP specification TS 25.213*